# EUROPEAN PATENT APPLICATION

(11) **EP 4 159 798 A1**
(43) Date of publication of application: **05.04.2023**
(21) Application number: 21818155.0
(22) Date of filing: 01.03.2021
(51) Int. Cl.: C08J 5/18, C08B 37/00

(54) **ß-1,3-GLUCAN ESTER DERIVATIVE AND ß-1,4-GLUCAN ESTER DERIVATIVE**

(30) Priority: 02.06.2020 JP 2020095896
(71) Applicant: LIXIL Corporation, Tokyo 141-0033 (JP); The University of Tokyo, Bunkyo-ku, Tokyo 113-8654 (JP)
(72) Inventor: UTSUNO Sayaka, Tokyo 136-8535 (JP); TANAKA Jun, Tokyo 136-8535 (JP); IWATA Tadahisa, Tokyo 113-8654 (JP)
(74) Representative: Grünecker Patent- und Rechtsanwälte PartG mbB
(86) International application number: PCT/JP2021/007728
(87) International publication number: WO 2021/246006

(57) **Abstract**

Provided are a β-1,3-glucan ester derivative and a β-1,4-glucan ester derivative which can obtain preferable water resistance, have both rigidity and flexibility, have excellent moldability, and can be synthesized in a short time. Provided are a β-1,3-glucan ester derivative and a β-1,4-glucan ester derivative in which at least a portion of hydrogen atoms of hydroxyl groups of a β-1,3-glucan or a β-1,4-glucan is substituted with a short chain component which is an acyl group having 3 carbon atoms and a long chain component substituted with an acyl group having 6-8 carbon atoms. The sum of the degree of substitution DSs of the short chain component and the degree of substitution DSl of the long chain component is preferably at least 2.0.

## Description

### TECHNICAL FIELD

The present disclosure relates to a β-1,3-glucan ester derivative and a β-1,4-glucan ester derivative.

### BACKGROUND ART

In recent years, technologies related to bioplastics produced from microorganisms and plants have been proposed from the viewpoint of environmental protection. Known examples of the bioplastics produced by microorganisms are β-1,3-glucan ester derivatives obtained through esterification of at least some of hydroxy groups in β-1,3-glucan with an acid.

It has been considered that the β-1,3-glucan ester derivatives and β-1,4-glucan ester derivatives having a similar structure thereto are molded for use in various applications. Conventionally, there has been disclosed a technology by which a β-1,3-glucan ester derivative having a mechanical property and thermoplasticity can be achieved by, for example, introducing a long-chain component having 14 or more carbon atoms (e.g., Patent Document 1).

Patent Document 1: PCT International Publication No. WO2020/013232

### DISCLOSURE OF THE INVENTION

### Problems to be Solved by the Invention

The technology disclosed in Patent Document 1 has a problem of insufficient water resistance for use in applications such as household equipment and plumbing and is also problematic from the viewpoint of achieving both rigidity and flexibility. Furthermore, the technology also has problems in that moldability is insufficient and it takes a long time to introduce a long-chain component into a β-1,3-glucan ester.

The present invention has been made considering the above and has an object to provide a β-1,3-glucan ester derivative and a β-1,4-glucan ester derivative capable of providing satisfactory water resistance, achieving both rigidity and flexibility, having excellent moldability, and being synthesized in a short time.

### Means for Solving the Problems

The present invention relates to a β-1,3-glucan ester derivative and a β-1,4-glucan ester derivative in which at least some of hydrogen atoms in hydroxy groups in β-1,3-glucan or β-1,4-glucan is substituted with a short chain component that is an acyl group having 3 carbon atoms and a long chain component that is an acyl group having 6 to 8 carbon atoms.

### PREFERRED MODE FOR CARRYING OUT THE INVENTION

A β-1,3-glucan ester derivative and a β-1,4-glucan ester derivative (hereinafter, may be described as "β-glucan ester derivative") according to the present embodiment is a polymer including a plurality of glucoses linked via a glycosidic linkage and having a main chain constituted by a β-1,3 glycosidic linkage or a β-1,4 glycosidic linkage, respectively. Hereinafter, the β-1,3-glucan ester derivative will be described as an example.

### (β-1,3-Glucan Ester Derivative)

A β-1,3-glucan ester derivative according to the present embodiment is preferably a curdlan ester derivative or a paramylon ester derivative. Both of curdlan and paramylon are derived from microorganisms. These can be esterified to form ester derivatives, and microorganism-derived plastics can be produced using such ester derivatives. Curdlan and paramylon are each a type of polysaccharide, β-1,3-glucan. Although derived from microorganisms, the curdlan ester derivative and the paramylon ester derivative according to the present embodiment have a strength similar to, for example, that of polypropylene (PP) and have excellent moldability.

The curdlan is β-1,3-glucan, which is a polysaccharide with a structure represented by Chemical Formula (1) below and found in soil bacteria. The curdlan has a molecular weight of about 1,000,000 and is characterized by having high strength but low fluidity. A curdlan ester derivative with a structure represented by Chemical Formula (2) below is obtained by esterifying at least some of hydroxy groups in the curdlan with an acid as described in detail later. The esterification may be carried out using conventionally known techniques.

Paramylon is a β-1,3-glucan, which is a polysaccharide with a structure represented by Chemical Formula (1) below and found in euglena (green algae). The paramylon has a molecular weight of about 300,000 and is characterized by having high fluidity but low strength. Like the curdlan, a paramylon ester derivative with a structure represented by Chemical Formula (2) below is obtained by esterifying at least some of hydroxy groups in the paramylon with an acid as described in detail later. The esterification may be carried out using conventionally known techniques.

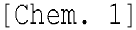

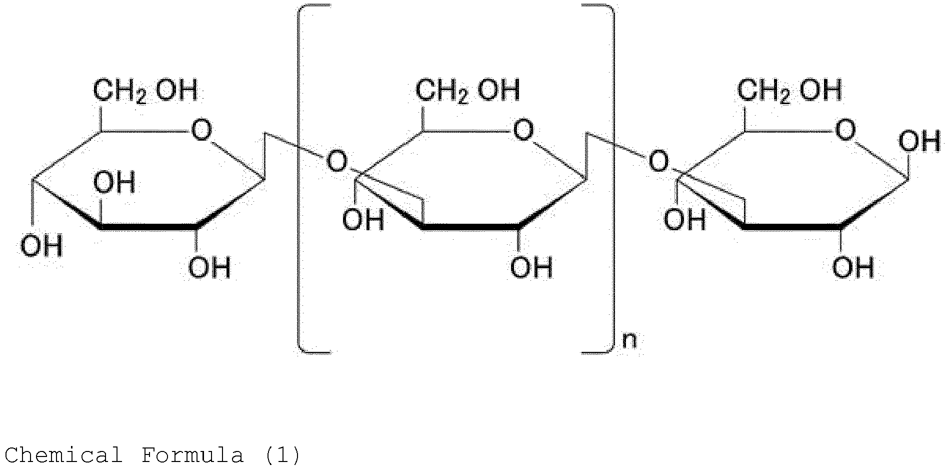

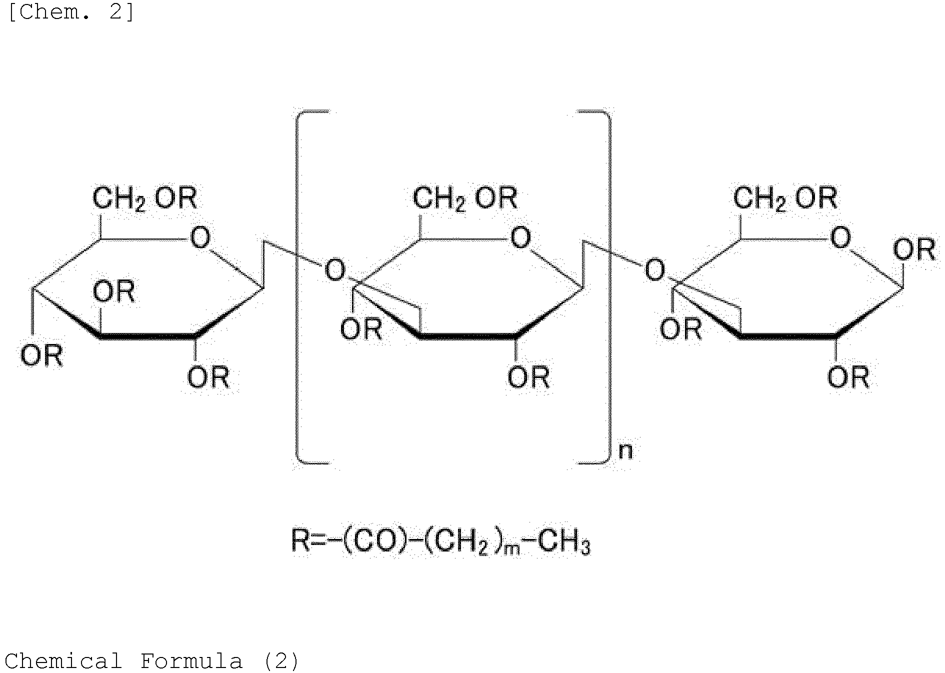

The substituent R in Chemical Formula (2) above includes a short chain component that is an acyl group having 3 carbon atoms and a long chain component that is an acyl group having any of 6 to 8 carbon atoms. This makes it possible to synthesize it in a shorter time than when only a long chain component is introduced as the substituent. Specifically, this makes it possible to synthesize it in a shorter time than when a long chain component having more than 8 carbon atoms is introduced as the substituent. Furthermore, when the β-1,3-glucan ester derivative is a heteroester having the short chain component and the long chain component that are different types of substituents, crystallinity and a thermal property (such as glass transition temperature and melt viscosity) of a molded product can be easily controlled and therefore injection moldability, rigidity, and flexibility can be adjusted to fall within a preferable range. Note that, the β-1,3-glucan ester derivative according to the present embodiment preferably does not include a substituent R having 4 and 5 carbon atoms. This makes it possible to suppress an odor such as a characteristic odor of a molded product and to apply the molded product to plumbing or household equipment.

For a degree of substitution with the substituent R in Chemical Formula (2) above, an overall degree of substitution DSs + DSl that is a sum of a degree of substitution with the short chain component DSs and a degree of substitution with the long chain component DS1 is 2.0 or more. The degree of substitution DSs and the degree of substitution DSl mean an average number of hydrogen atoms substituted with the short chain component and the long chain component per glucose unit, respectively. The DSs + DSl of 2.0 or more provides water resistance (hydrolysis resistance) and long-term durability that are demanded for plumbing or household equipment. The DSs + DSl of less than 2.0 increases a rate of a hydroxy group remaining in a molecule and therefore the resultant derivative cannot achieve satisfactory water resistance or long-term durability and cannot be preferably used in applications where it comes in contact with water. The DSs + DSl is preferably 2.5 or more and most preferably 3.0.

A ratio DSs:DSl which is a ratio of the degree of substitution with the short chain component DSs to the degree of substitution with the long chain component DSl is preferably 1.2:1.8 to 2.1:0.9. This makes it possible to suppress poor fluidity during molding of a resin by injection molding. Furthermore, the resultant molded product can achieve both rigidity and flexibility. From the above viewpoints, the ratio DSs:DSl is more preferably 1.5:1.5 to 2.1:0.9. The degree of substitution with the short chain component DSs and the degree of substitution with the long chain component DSl may be determined by, for example, ¹HNMR.

Structures of the short chain component which is an acyl group having 3 carbon atoms and the long chain component which is an acyl group having 6 to 8 carbon atoms are not particularly limited as long as each satisfies the above condition with regard to the number of carbon atoms. A linkage between carbons may be a saturated linkage or an unsaturated linkage may be included. In addition thereto, the components may be any of those having a linear structure, a branched structure, and a cyclic structure. For example, a saturated aliphatic acyl group having 3 carbon atoms and a linear structure, i.e., a propanoyl group; one having a branched structure, i.e., an isopropanoyl group; one having a cyclic structure, i.e., a cyclopropanoyl group; saturated aliphatic acyl groups having 6 to 8 carbon atoms and a linear structure, i.e., an n-hexanoyl group, an n-heptanoyl group, and an n-octanoyl group; those having a branched structure, i.e., an isohexanoyl group, an isoheptanoyl group, and an isooctanoyl group; those having a cyclic structure, i.e., a cyclohexanoyl group, a cycloheptanoyl group, and a cyclooctanoyl group; those having an unsaturated linkage, i.e., a hexenoyl group, a heptenoyl group, and an octenoyl group; those having an aromatic ring, e.g., an acetylphenyl group; and the like can be exemplified.

The hydrogen atoms in the hydroxy groups in the β-1,3-glucan are substituted with the short chain component and the long chain component via esterification with an acid as described above. Examples of the acid for use in esterification include carboxylic acids having the numbers of carbon atoms and structures corresponding to the short chain component and the long chain component. For example, as a carboxylic acid for use in introduction of the short chain component that is a saturated aliphatic acyl group having 3 carbon atoms, propionic acid is exemplified. As a carboxylic acid for use in introduction of the long chain component that is a saturated aliphatic acyl group having 6 to 8 carbon atoms and, for example, a linear structure, n-hexanoic acid, n-heptanoic acid, and n-octanoic acid are exemplified. Similarly, for those having a branched structure, isohexanoic acid, isoheptanoic acid, and isooctanoic acid are exemplified; for those having a cyclic structure, a cyclohexane carboxylic acid, a cycloheptane carboxylic acid, and a cyclooctane carboxylic acid are exemplified; for those having an unsaturated linkage, hexenoic acid, heptenoic acid, and octenoic acid are exemplified; and for those having an aromatic ring, benzoic acid is exemplified. The acid can also serve as a solvent for the resultant β-1,3-glucan ester derivative. An acid other than the acid for use in the esterification may be used in combination as the acid serving as a solvent. For example, trifluoroacetic anhydride may be used in combination.

### (β-1,4-glucan ester derivative)

The β-1,3-glucan ester derivative has been described as an example of the β-glucan ester derivative, but a β-1,4-glucan ester derivative according to the present embodiment has a comparable composition and effect. In other words, β-1,4-glucan is a polymer in which a plurality of glucoses are linked via a β-1,4-glycosidic linkage similar to the β-1,3-glucan, and, for example, a plant-derived cellulose is exemplified. The β-1,4-glucan ester derivative has a structure in which at least some of hydrogen atoms in hydroxy groups in β-1,4-glucan is substituted with the short chain component and the long chain component. The β-1,4-glucan ester derivative can be synthesized via esterification in the same manner as in the β-1,3-glucan ester derivative.

### (Method of purifying β-glucan ester derivative)

A method of purifying the β-glucan ester derivative according to the present embodiment includes, for example, a deposition step for mixing a reprecipitation solvent and a synthetic reaction liquid containing the β-glucan ester derivative, and a cooling step for lowering a temperature of at least one of the reprecipitation solvent and the synthetic reaction liquid. In addition to the steps mentioned above, the method may include a washing step for washing the resultant deposit from the deposition step.

### Deposition step

The deposition step is a step for mixing a reprecipitation solvent and a synthetic reaction liquid containing a β-glucan ester derivative produced by esterification of at least some of hydroxy groups in a β-glucan ester derivative with an acid. In the deposition step, the β-glucan ester derivative is deposited or re-precipitated.

The reprecipitation solvent is composed of, for example, a good solvent in which the β-glucan ester derivative has high solubility; and a poor solvent in which the β-glucan ester derivative has low solubility. In the deposition step, the reprecipitation solvent is mixed with the synthetic reaction liquid to deposit a deposit including the β-glucan ester derivative. In the deposition step, the reprecipitation solvent is preferably added to and mixed with the synthetic reaction liquid. More preferably, the good solvent is added to the synthetic reaction liquid and dissolved in it, and then the poor solvent is added dropwise to the resulting solution. This can prevent deposition at an interface between the synthetic reaction liquid and the solvent and suppress aggregation of deposits. Moreover, the deposition step can be performed in a single vessel.

The good solvent may be any solvent in which the β-glucan ester derivative is soluble. For example, the good solvent is preferably an alcohol such as methanol, or a ketone such as acetone. Additionally, when a washing step for washing a re-precipitated product is added, it is preferable to use a good solvent having a high ability to wash off the remaining acid used for esterification from the re-precipitated product. A single good solvent may be used, or a mixture of two or more good solvents may be used.

The poor solvent is a solvent in which the β-glucan ester derivative has low solubility and in which the β-glucan ester derivative has lower solubility than that at least in the good solvent. Specifically, the poor solvent is preferably water. A single poor solvent may be used, or a mixture of two or more poor solvents may be used.

### Cooling Step

A cooling step is a step for lowering a temperature of at least one of the synthetic reaction liquid and the reprecipitation solvent. For example, the cooling step may be a step for cooling at least one of the synthetic reaction liquid and the reprecipitation solvent before the synthetic reaction liquid is mixed with the reprecipitation solvent in the deposition step. Alternatively, the cooling step may be a step for cooling a mixture solution of the synthetic reaction liquid and the reprecipitation solvent after they are mixed in the deposition step. The cooling step can increase a yield of the β-glucan ester derivative.

### Washing Step

A washing step is a step for washing the deposit including the β-glucan ester derivative deposited in the deposition step. The washing step removes impurities included in the deposit, such as the acids used for esterification, from the deposit. The washing step may be performed using any appropriate solution in which the β-glucan ester derivative has low solubility and preferably in which the acid used for esterification has high solubility. The washing step may be performed using any known method without limitation.

The β-glucan ester derivative purified by the purification method according to the present embodiment is then molded by any of various molding methods. For example, injection molding, casting, compression molding, inflation molding, and other commonly used methods can be applied as the molding methods. The β-glucan ester derivative according to the present embodiment has a satisfactory melt viscosity and therefore is more preferably molded by injection molding. A molded product can be applied to various applications such as plumbing products for use in plumbing such as a bath and a kitchen in a house, household equipment, and an exterior material for a house.

The present disclosure is not limited to the embodiments described above and may be altered or modified as long as the object of the present disclosure can be achieved, and such altered or modified versions will fall within the scope of the present disclosure.

### EXAMPLES

Hereinafter, the present disclosure will be described in more detail with reference to examples, but is not limited thereto.

### <Example 1>

Propionic acid (400 mL) and n-hexanoic acid (200 mL) were added to a reaction vessel and stirred at room temperature. Then, 600 mL of trifluoroacetic anhydride was added dropwise to the reaction vessel. After the completion of the addition, the resultant mixture was heated to 50°C, 15 g of curdlan which had been vacuum-dried at 100°C for 3 hours was added thereto and stirred until the curdlan was dissolved (reaction time: 77 minutes). Then, the resultant reaction liquid was cooled to 20°C, methanol was added thereto, and then water was added until a solid was deposited, at which time the reaction is quenched. The resultant solid was repeatedly washed with a mixed solution of methanol and water a few times until the pH of the filtrate was 7, and dried at 100°C for 17 hours to thereby obtain 25.9 g of β-glucan ester derivative as a white solid.

β-glucan ester derivatives of Examples 2 to 10 and Comparative Examples 1 to 16 were obtained in the same manner as in Example 1, except that raw materials shown in Table 1 and reaction times shown in Table 1 were used.

**[Table 1]**

| Example/ Comparative Example | β-qlucan | | Acid | | | Reaction time (min) | Yield (9) |
|---|---|---|---|---|---|---|---|
| | Type | Weight (g) | Trifluoroacetic anhydride(ml) | Carboxylic acid | | | |
| Example 1 | Curdlan | 15 | 600 | Propionic acid 400ml | n-hexanoic acid 200ml | 77 | 25.9 |
| Example 2 | Curdlan | 8 | 320 | Propionic acid 160ml | n-hexanoic acid 160ml | 60 | 17.5 |
| Example 3 | Curdlan | 15 | 600 | Propionic acid 200ml | n-hexanoic acid 400ml | 60 | 31.6 |
| Example 4 | Paramylon | 15 | 600 | Propionic acid 400ml | n-hexanoic acid 200ml | 65 | 29.8 |
| Example 5 | Paramylon | 0.75 | 30 | Propionic acid 15ml | n-hexanoic acid 15ml | 60 | 1.4 |
| Example 6 | Paramylon | 15 | 600 | Propionic acid 200ml | n-hexanoic acid 400ml | 65 | 34.1 |
| Example 7 | Curdlan | 15 | 600 | Propionic acid 300ml | n-octanoic acid 300ml | 56 | 33.1 |
| Example 8 | Curdlan | 15 | 600 | Propionic acid 200ml | n-octanoic acid 400ml | 53 | 35.8 |
| Example 9 | Paramylon | 15 | 600 | Propionic acid 300ml | n-octanoic acid 300ml | 68 | 32.9 |
| Example 10 | Paramylon | 15 | 600 | Propionic acid 200ml | n-octanoic acid 400ml | 85 | 37.1 |
| Comparative Example 1 | Curdlan | 0.5 | 20 | Propionic acid 10ml | - | 65 | 0. 8 |
| Comparative Example 2 | Curdlan | 5 | 200 | n-hexanoic acid 100ml | - | 120 | 11.4 |
| Comparative Example 3 | Paramylon | 3 | 120 | Propionic acid 60ml | - | 120 | 5.4 |
| Comparative Example 4 | Paramylon | 3 | 120 | n-hexanoic acid 60ml | - | 120 | 7.6 |
| Comparative Example 5 | Curdlan | 15 | 600 | Propionic acid 120ml | n-octanoic acid 480ml | 60 | 39.2 |
| Comparative Example 6 | Curdlan | 2.5 | 100 | n-octanoic acid 50ml | - | 120 | 7.2 |
| Comparative Example 7 | Paramylon | 15 | 600 | Propionic acid 120ml | n-octanoic acid 480ml | 80 | 40.7 |
| Comparative Example 8 | Paramylon | 3 | 120 | n-octanoic acid 60ml | - | 120 | 9.0 |
| Comparative Example 9 | Curdlan | 3.5 | 140 | Butyric acid 70ml | - | 70 | 4.9 |
| Comparative Example 10 | Curdlan | 2.5 | 100 | Valeric acid 50ml | - | 120 | 3.6 |
| Comparative Example 11 | Curdlan | 1 | 40 | Decanoic acid 20g | - | 120 | 2.4 |
| Comparative Example 12 | Curdlan | 0.5 | 20 | Lauric acid 10g | - | 180 | 3.1 |
| Comparative Example 13 | Paramylon | 3 | 120 | Butyric acid 60ml | - | 120 | 4.1 |
| Comparative Example 14 | Paramylon | 3 | 120 | Valeric acid 60ml | - | 120 | 4.7 |
| Comparative Example 15 | Paramylon | 3 | 40 | Decanoic acid 20g | - | 120 | 3.7 |
| Comparative Example 16 | Paramylon | 3 | 40 | Lauric acid 20g | - | 240 | 2.8 |

### (Measurement of molecular weight and dispersity)

The β-glucan ester derivatives of Examples and Comparative Examples were measured for a weight average molecular weight (Mw) and a dispersity (Mw/Mn) that is a ratio of a weight average molecular weight (Mw) to a number average molecular weight (Mn). The weight average molecular weight (Mw) and the number average molecular weight (Mn) were measured using GPC (10/20A series, Shimadzu Corporation) under the belowmentioned conditions. The results are shown in Table 2.

Solvent: chloroform for HPLC, Column: dual column (K-806M, K-802, SHOWA DENKO K.K.), Flow rate: 0.8 mL/min, and Column oven: 40°C

### (Measurement of degree of substitution)

The β-glucan ester derivatives of Examples and Comparative Examples were measured for degrees of substitution with a short chain component and a long chain component by ¹HNMR (JNM-ECA (500 MHz), JEOL Ltd.). Chloroform-d (99.8% by ATOM, FUJIFILM Wako Pure Chemical Corporation) was used as a measurement solvent. The degrees of substitution with the short chain component and the long chain component were calculated from a ratio of peak areas of substituents corresponding to the short chain component and the long chain component in ¹H NMR spectra and a peak area of ring protons in a glucose unit. A sum of the degree of substitution with the short chain component (DSs) and the degree of substitution with the long chain component (DSl) when the maximum degree of substitution is 3 in terms of a glucose unit was determined as an overall degree of substitution. The results are shown in Table 2.

### (Measurement of Tm, Tg)

The β-glucan ester derivatives of Examples and Comparative Examples were measured for a melting point (Tm, °C) and a glass transition temperature (Tg, °C) using DSC (DSC8500, PerkinElmer, Inc.). A sample was placed on an aluminum pan, and the temperature was increased from 30°C to 250°C at a heating rate of 20°C/min and held for 1 minute after reaching 250°C. Then, the temperature was decreased to -60°C at a cooling rate of 200°C/min and held for 1 minute after reaching -60°C. Then, the temperature was increased to 250°C at a heating rate of 20°C/min. The melting point (Tm, °C) and the glass transition temperature (Tg, °C) were calculated. The results are shown in Table 2.

### (Evaluation of odor)

The β-glucan ester derivatives of Comparative Examples 1 to 4, 6, and 8 to 16, each of which was synthesized using a single carboxylic acid, were evaluated for odor according to the following criteria. One having a score of 2 or more was considered to have passed. The results are shown in Table 2.
4 No odor
3 Very weak acid odor or characteristic odor
2 Weak acid odor
1 Characteristic odor

**[Table 2]**

| Example/ Comparative Example | Molecular weight | | Substituting structure | | Physical property | | Odor |
|---|---|---|---|---|---|---|---|
| | Mw (Weight average molecular weight) | Dispersit y (Mw/Mn) | Overall degree of substitution DSs+DSl | Ratio of carbon chain DSs : DSl | Tm **(°C)** | Tg **(°C)** | |
| Example 1 | 1.09×10⁶ | 2.1 | 3 | C3:C6=2.1:0.9 | 176 | 71 | 4 |
| Example 2 | 1.57×10⁶ | 1.7 | 3 | C3:C6=1.6:1.4 | 163 | 67 | 4 |
| Example 3 | 1.31×10⁶ | 2.3 | 3 | C3:C6=1.2:1.8 | 146 | 51 | 4 |
| Example 4 | 4.93×10⁵ | 2.5 | 3 | C3:C6=2.1:0.9 | 176 | 61 | 4 |
| Example 5 | 5.68×10⁵ | 2.3 | 3 | C3:C6=1.6:1.4 | 157 | 63 | 4 |
| Example 6 | 4.37×10⁵ | 2.1 | 3 | C3:C6=1.2:1.8 | 142 | 46 | 4 |
| Example 7 | 1.42×10⁶ | 2.5 | 3 | C3:C8=2.0:1.0 | - | - | 4 |
| Example 8 | 1.61×10⁶ | 2.2 | 3 | C3:C8=1.5:1.5 | - | - | 4 |
| Example 9 | 5.10×10⁵ | 2.2 | 3 | C3:C8=2.0:1.0 | - | - | 4 |
| Example 10 | 5.47×10⁵ | 2.1 | 3 | C3:C8=1.5:1.5 | - | - | 4 |
| Comparative Example 1 | 7.67×10⁵ | 2.1 | 3 | C3=3 | 234 | 114 | 2 |
| Comparative Example 2 | 1.86×10⁶ | 1.9 | 3 | C6=3 | 118 | 71 | 2 |
| Comparative Example 3 | 3.84×10⁵ | 2.0 | 3 | C3=3 | 213 | 119 | 2 |
| Comparative Example 4 | 7.69×10⁵ | 2.1 | 3 | C6=3 | 126 | - | 2 |
| Comparative Example 5 | 1.64×10⁶ | 2.3 | 3 | C3:C8=1.0:2.0 | - | - | 4 |
| Comparative Example 6 | 1.77×10⁶ | 2.4 | 3 | C8=3 | - | 50 | 2 |
| Comparative Example 7 | 5.10×10⁵ | 2.1 | 3 | C3:C8=1.1:1.9 | - | - | 4 |
| Comparative Example 8 | 7.72×10⁵ | 2.3 | 3 | C8=3 | - | - | 2 |
| Comparative Example 9 | 1.78×10⁶ | 2.0 | 3 | C4=3 | 190 | 74 | 1 |
| Comparative Example 10 | 2.10×10⁶ | 1.9 | 3 | C5=3 | 168 | 51 | 1 |
| Comparative Example 11 | 2.12×10⁶ | 2.2 | 3 | C10=3 | - | - | 3 |
| Comparative Example 12 | 9.71×10⁵ | 3.3 | 3 | C12=3 | - | - | 3 |
| Comparative Example 13 | 5.67×10⁵ | 1.9 | 3 | C4=3 | 211 | 70 | 1 |
| Comparative Example 14 | 8.30×10⁵ | 2.2 | 3 | C5=3 | 191 | - | 1 |
| Comparative Example 15 | 8.78×10⁵ | 2.2 | 3 | C10=3 | - | - | 3 |
| Comparative Example 16 | 8.74×10⁵ | 2.2 | 3 | C12=3 | - | - | 3 |

The β-glucan ester derivatives of Examples and Comparative Examples were injection-molded under the conditions shown in Table 3, thereby producing samples for use in physical property measurement. An injection molding device used was MiniJet Pro (manufactured by Thermo Fisher Scientific, Inc.). An injection pressure was 900 bar, 10 sec and dwelling was 250 bar, 10 sec. For a bending test and a Charpy test described below, a sample mold having a length of 80 mm, a width of 12.5 mm, and a thickness of 2.5 mm (strip) was used. For a tensile test described below, a sample mold having a length of 75 mm, a width of 12.5 mm, and a thickness of 2.0 mm (tensile specimen: ISO-527-2-5A) was used. Note that, molding temperatures and mold temperatures shown in Table 3 were adjusted depending on Tg and Tm, and fluidity upon molding.

### (Evaluation for crack in molded product)

Molded products produced from the β-glucan ester derivatives of Examples and Comparative Examples were evaluated for crack under the following conditions. The results are shown in Table 3.
- 2: There was no crack in molded product
- 1: There was a crack in molded product

### (Evaluation for injection moldability)

Molded products produced from the β-glucan ester derivatives of Comparative Examples were evaluated for injection moldability under the following conditions. The results are shown in Table 3.
- 2: Completely filled
- 1: Unmoldable due to high viscosity

**[Table 3]**

| Example/ Comparative Example | Molding temperature **(°C)** | Mold temperature **(°C)** | Crack in molded product | Injection moldability |
|---|---|---|---|---|
| Example 1 | 215 | 50 | 2 | 2 |
| Example 2 | 190 | 50 | 2 | 2 |
| Example 3 | 180 | 40 | 2 | 2 |
| Example 4 | 210 | 50 | 2 | 2 |
| Example 5 | 180 | 50 | 2 | 2 |
| Example 6 | 170 | 40 | 2 | 2 |
| Example 7 | 215 | 50 | 2 | 2 |
| Example 8 | 190 | 50 | 2 | 2 |
| Example 9 | 210 | 50 | 2 | 2 |
| Example 10 | 180 | 50 | 2 | 2 |
| Comparative Example 1 | 235 | 50 | - | 2 |
| Comparative Example 2 | 170 | 50 | - | 2 |
| Comparative Example 3 | 230 | 50 | - | 2 |
| Comparative Example 4 | 160 | 50 | - | 2 |
| Comparative Example 5 | 170 | 40 | 1 | - |
| Comparative Example 6 | 160 | 40 | - | 2 |
| Comparative Example 7 | 170 | 40 | 1 | - |
| Comparative Example 8 | 160 | 40 | - | 2 |
| Comparative Example 9 | - | - | - | 2 |
| Comparative Example 10 | - | - | - | 2 |
| Comparative Example 11 | - | - | - | 1 |
| Comparative Example 12 | - | - | - | 1 |
| Comparative Example 13 | - | - | - | 2 |
| Comparative Example 14 | - | - | - | 2 |
| Comparative Example 15 | - | - | - | 1 |
| Comparative Example 16 | - | - | - | 1 |

### (Measurement of tensile strength, tensile modulus)

The samples of Examples 1 to 10 and Comparative Examples 1 to 8 that had been molded as described above were measured for tensile strength and tensile modulus. This measurement was according to JIS K 7161. The measurement was performed in triplicate and an average value was calculated. One having a tensile strength of 10 MPa or more and a tensile modulus of 300 Mpa or more was considered to have passed. The results are shown in Table 4. Note that, "DL" in Table 4 means a detection limit.

### (Measurement of bending strength, bending modulus)

The samples of Examples 1 to 10 and Comparative Examples 1 to 8 that had been molded as described above were measured for bending strength and bending modulus. This measurement was according to JIS K 7171, except that a specimen having a thickness of 2.6 ± 0.2 mm was used. The measurement was performed in triplicate and an average value was calculated. One having a bending strength of 5 MPa or more and a bending modulus of 150 Mpa or more was considered to have passed. The results are shown in Table 4.

### (Charpy impact test)

The samples of Examples 1 to 10 and Comparative Examples 1 to 8 that had been molded as described above were measured for a Charpy impact value. This measurement was according to JIS K 7111. An edgewise impact specimen was produced and measured for a notched Charpy impact strength. The measurement was performed in pentaplicate and an average value was calculated. One having the Charpy impact value of 9 kJ/m² or more was considered to have passed. The results are shown in Table 4.

**[Table 4]**

| Example/ Comparative Example | Tensile strength (MPa) | Tensile modulus (MPa) | Bending strength (MPa) | Bending modulus (MPa) | Charpy impact value (kJ/m²) |
|---|---|---|---|---|---|
| Example 1 | 36 | - | 39 | 1039 | 10 |
| Example 2 | 27 | - | 26 | 721 | 16 |
| Example 3 | 28 | 1150 | 17 | 493 | 12 |
| Example 4 | 41 | 2120 | 38 | 883 | 9 |
| Example 5 | 28 | - | 26 | 745 | 15 |
| Example 6 | 27 | 1234 | 16 | 476 | 12 |
| Example 7 | 20 | 1093 | 23 | 645 | 13 |
| Example 8 | 15 | 672 | 9 | 298 | 12 |
| Example 9 | 14 | 1152 | 20 | 567 | 11 |
| Example 10 | 12 | 566 | 9 | 253 | 39 |
| Comparative Example 1 | 37 | - | 53 | 1342 | 6 |
| Comparative Example 2 | 5 | - | 3 | 86 | 12 |
| Comparative Example 3 | 35 | 2489 | 59 | 1523 | 12 |
| Comparative Example 4 | 5 | - | 3 | 77 | 16 |
| Comparative Example 5 | 2 | - | 0.4 | 5 | 16 |
| Comparative Example 6 | DL | - | 0.7 | 10 | 10 |
| Comparative Example 7 | 3 | - | 0.8 | 11 | 26 |
| Comparative Example 8 | DL | - | 0.4 | 3 | 9 |

It was confirmed from the results of Examples and Comparative Examples that the β-glucan ester derivatives according to Examples took less time to react than the β-glucan ester derivative according to Comparative Examples. Furthermore, it was also confirmed that, for the β-glucan ester derivatives according to Examples, the resultant molded products had no crack, in other words, rigidity and flexibility were both achieved.

## Claims

1. A β-1,3-glucan ester derivative and a β-1,4-glucan ester derivative, wherein at least some of hydrogen atoms in hydroxy groups in β-1,3-glucan or β-1,4-glucan is substituted with a short chain component that is an acyl group having 3 carbon atoms and a long chain component that is an acyl group having 6 to 8 carbon atoms.

2. The β-1,3-glucan ester derivative and β-1,4-glucan ester derivative according to claim 1, wherein a sum of a degree of substitution with the short chain component DSs and a degree of substitution with the long chain component DSl is 2.0 or more.

3. The β-1,3-glucan ester derivative and β-1,4-glucan ester derivative according to claim 1 or 2, wherein a ratio DSs:DSl of the degree of substitution with the short chain component DSs to the degree of substitution with the long chain component DSl is 1.2:1.8 to 2.1:0.9.

4. The β-1,3-glucan ester derivative and β-1,4-glucan ester derivative according to any one of claims 1 to 3 for use as a material for injection molding.
